# EUROPÄISCHE PATENTSCHRIFT

(11) **EP 3 658 306 B1**
(45) Veröffentlichungstag und Bekanntmachung des Hinweises auf die Patenterteilung: **07.10.2020**
(21) Anmeldenummer: 19768762.7
(22) Anmeldetag: 10.09.2019
(51) Int. Cl.: B21C 37/15, B21K 23/04, B21B 1/08, B62D 21/02, B62D 29/00

(54) **LÄNGSTRÄGER FÜR EIN STRASSENFAHRZEUG**
LONGITUDINAL BEAM FOR A ROAD VEHICLE
SUPPORT LONGITUDINAL POUR UN VÉHICULE ROUTIER

(30) Priorität: 18.09.2018 DE 102018122857
(43) Veröffentlichungstag der Anmeldung: 03.06.2020
(73) Patentinhaber: HÖRMANN AUTOMOTIVE GMBH, 85614 Kirchseeon (DE); Hörmann Automotive Gustavsburg GmbH, 65462 Gustavsburg (DE)
(72) Erfinder: DUSCHKA, Alexander, 55118 Mainz (DE); HUSE, Philipp, 60314 Frankfurt (DE); SCHMITT, Wolfram, 55283 Nierstein (DE)
(74) Vertreter: Tetzner, Michael
(86) Internationale Anmeldenummer: PCT/EP2019/074073
(87) Internationale Veröffentlichungsnummer: WO 2020/058038

(56) Entgegenhaltungen:
- EP-A1- 3 103 578
- WO-A1-03/039939
- DE-A1- 10 039 768
- DE-T5-112015 005 270

## Beschreibung

Die Erfindung betrifft einen Längsträger für ein Straßenfahrzeug sowie ein Verfahren zu dessen Herstellung.

Längsträger bilden bei vielen Kraftfahrzeugen wesentliche Komponenten des Chassis. Gemäß einem üblichen Aufbau sind zwei Längsträger beiderseits des Fahrzeugs angeordnet, die sich in Längsrichtung entlang wenigstens eines überwiegenden Teils des Chassis erstrecken. Die Längsträger sind dabei durch eine Mehrzahl von Querträgern miteinander verbunden und bilden so gewissermaßen das Grundgerüst des Chassis. Die Gesamtheit aus Längsträgern und Querträgern bestimmt darüber hinaus in ihrem Zusammenspiel im Wesentlichen die Gesamtsteifigkeit des Chassis. Daher bestehen zum einen hohe Anforderungen an die Steifigkeit der Längsträger sowohl hinsichtlich statischer als auch dynamischer Lasten. Zum anderen sollen vor allem unter Aspekten des Energieverbrauchs die Komponenten des Chassis - wie auch allgemein alle anderen Fahrzeugkomponenten - eine möglichst geringe Masse haben. Im Stand der Technik sind unterschiedliche Bauweisen für Längsträger bekannt. Einerseits kann der Längsträger bspw. als geschlossenes Vierkantprofil oder U-Profil aus Stahlblech ausgebildet sein. Hiermit lassen sich bei ausreichend dickem Blech eine normalerweise die gewünschten mechanischen Eigenschaften erreichen, allerdings geht damit eine signifikante Gewichtserhöhung einher. Hinsichtlich des Gewichts bzw. der Masse kann durch eine Kammerbauweise eine wesentliche Verbesserung erzielt werden, wodurch sich je nach Lastkollektiv eine optimale Verbindung aus geringem Gewicht und mechanischer Belastbarkeit erreichen lässt. Dies wird im Stand der Technik z.B. durch Aluminium-Strangpressprofile erreicht, in die sich eine Mehrzahl von Kammern integrieren lassen. Derartige Strangpressprofile sind allerdings aufgrund des verwendeten Werkstoffs Aluminium vergleichsweise teuer und unter Umständen auch nicht so stabil wie Längsträger aus Stahlblech. Neben der Belastbarkeit beim normalen Betrieb des Fahrzeugs ist auch das Verhalten im Crashfall zu berücksichtigen, wobei Längsträger insbesondere bei einem Seitenaufprall beansprucht werden. Auch hierbei lässt sich durch die Kammerbauweise gegenüber einem einfacher gestalteten Profil gleichen Gewichts eine verbesserte Querstabilität realisieren. Es sind auch noch weitere Fertigungsverfahren bekannt, bei denen es stets darum geht, eine optimale Kombination aus geringem Gewicht und erwünschten mechanischen Eigenschaften zu erreichen.

Die DE 11 2015 005270 T5 offenbart einen Fahrzeugrahmen, welcher in einem Frontabschnitt eines Fahrzeugs angeordnet ist. Er besteht aus einem flächigen Außenelement und mehreren im Inneren angeordneten Verstärkungselementen, die mit dem Außenelement verbunden sind und geschlossene Querschnitte bilden.

Ferner sind aus der DE 103 05 542 A1 Profile aus Blech für den Einsatz als Trag-, Versteifungs- oder Deformationselemente bekannt, die durch Spaltprofilieren hergestellte Flansche aufweisen, die durch Anfügen an mindestens einen Steg oder an ein weiteres Bauteil wenigstens eine Kammer bilden.

Der Erfindung liegt daher die Aufgabe zu Grunde, einen sowohl hinsichtlich des Gewichts als auch der mechanischen Eigenschaften optimierten, kostengünstig herstellbaren Längsträger bereitzustellen.

Die Aufgabe wird erfindungsgemäß durch einen Längsträger nach Anspruch 1 sowie ein Verfahren nach Anspruch 9 gelöst.

Durch die Erfindung wird ein Längsträger für ein Straßenfahrzeug zur Verfügung gestellt. Der Längsträger ist selbstverständlich für ein Chassis des Straßenfahrzeugs vorgesehen und erstreckt sich in montierten Zustand entlang der Längsachse des Straßenfahrzeugs. Es kann sich um einen Längsträger für ein Kraftfahrzeug, bspw. einen PKW oder auch für einen Nutzfahrzeug wie ein Omnibus oder LKW, handeln. Daneben könnte es sich allerdings auch bspw. um einen Längsträger für einen Auflieger oder einen Anhänger handeln.

Der Längsträger weist eine Mehrzahl von Innenelementen auf, die sich im Querschnitt des Längsträgers entlang einer ersten Richtung erstrecken und entlang einer zweiten Richtung zueinander versetzt angeordnet sind. Dabei bezieht sich die Bezeichnung "Querschnitt" auf eine Schnittebene quer zur Verlaufsrichtung des Längsträgers. Soweit die Verlaufsrichtung des Längsträgers mit der (Fahrzeug-)Längsrichtung bzw. der X-Achse übereinstimmt, kann es sich bei der Querschnittsebene um die Y-Z-Ebene handeln. Die Querschnittebene kann in jedem Fall durch zwei Richtungen gekennzeichnet werden, die hier als erste und zweite Richtung bezeichnet werden und die insbesondere senkrecht zueinander stehen können. Namentlich kann es sich bei der ersten Richtung um die Y-Richtung handeln und bei der zweiten Richtung um die Z-Richtung. Allerdings könnte bspw. auch die erste Richtung die Z-Richtung sein und die zweite Richtung die Y-Richtung. Die Innenelemente erstrecken sich entlang der ersten Richtung und können insbesondere auch wenigstens abschnittsweise parallel zu dieser verlaufen, Jedes der Innenelemente kann aber auch wenigstens abschnittsweise schräg zur ersten Richtung verlaufen. Die Innenelemente sind entlang der zweiten Richtung zueinander versetzt angeordnet. Dabei kann insbesondere ein überwiegender Teil jedes Innenelements zum benachbarten Innenelement beabstandet sein, so dass ein Zwischenraum gegeben ist. Jedes Innenelement erstreckt sich des Weiteren entlang wenigstens eines Teils des Längsträgers in dessen Verlaufsrichtung, ggf. sogar entlang der gesamten Länge des Längsträgers.

Weiterhin weist der Längsträger wenigstens ein flächiges Außenelement auf, das sich entlang der zweiten Richtung erstreckt, wobei wenigstens zwei Innenelemente bezüglich der ersten Richtung beiderseits endseitig durch wenigstens ein Außenelement miteinander verbunden sind, so dass zwischen ihnen wenigstens eine Kammer ausgebildet ist. Gemäß einer Ausgestaltung ist die jeweilige Kammer ausschließlich durch die zwei Innenelemente begrenzt bzw. durch diese gebildet. Gemäß einer anderen Ausgestaltung ist die jeweilige Kammer durch die zwei Innenelemente sowie durch wenigstens ein Außenelement begrenzt bzw. durch diese gebildet. In letzterem Fall kann man auch davon sprechen, dass die Kammer zwischen den zwei Innenelementen und wenigstens einem Außenelement ausgebildet ist. Bei der Kammer handelt es sich um eine Ausnehmung bzw. einen Hohlraum, der von einer Wandung umgeben und im Querschnitt normalerweise vollständig von der Wandung umschlossen ist. Unter Umständen kann die Wandung, die durch wenigstens zwei der Innenelemente sowie optional durch das wenigstens eine Außenelement gebildet ist, durch wenigstens eine lokale Ausnehmung durchbrochen sein, bspw. aus Gründen der Gewichtsersparnis. Sofern eine derartige lokale Ausnehmung gegeben ist, ist sie allerdings entlang der Verlaufsrichtung des Längsträgers auf einen Abschnitt begrenzt.

Das wenigstens eine Außenelement ist flächig ausgebildet, man könnte auch sagen es kann durch eine (unter Umständen nicht-konstante) Dicke beschrieben werden, die vergleichsweise klein gegenüber seinen anderen Dimensionen ist. Es kann bspw. die Form einer Platte oder eines Blechs haben, wobei es im Allgemeinen nicht durchgängig eben ausgebildet sein muss, sondern wenigstens bereichsweise gebogen oder abgewinkelt sein kann. Das wenigstens eine Außenelement erstreckt sich entlang der zweiten Richtung (entlang welcher die Innenelemente zueinander versetzt sind), wobei wenigstens zwei Innenelemente bezüglich der ersten Richtung beiderseits endseitig durch wenigstens ein Außenelement verbunden sind. Anders ausgedrückt, die jeweiligen Innenelemente sind bezüglich der ersten Richtung an einem ersten Ende bzw. in einem ersten Endbereich mit wenigstens einem Außenelement verbunden, so dass sie durch dieses bzw. diese miteinander verbunden sind, und sie sind bezüglich der ersten Richtung an einem zweite, gegenüberliegenden Ende bzw. in einem zweiten Endbereich mit wenigstens einem Außenelement verbunden, so dass sie durch dieses bzw. diese miteinander verbunden sind. Dabei sind die Innenelemente normalerweise wenigstens überwiegend bezüglich der ersten Richtung "innen" angeordnet, während das wenigstens eine Außenelement "außen" angeordnet ist. Dabei kann wenigstens ein Außenelement gewissermaßen um die Innenelemente herumgreifen und so beiderseits angeordnet sein. In diesem Fall kann das Außenelement z.B. ein offenes U-Profil oder ein in sich geschlossenes Profil aufweisen. Alternativ können wenigstens zwei Außenelemente auf entlang der ersten Richtung gegenüberliegenden Seiten des Längsträgers angeordnet sein. Die Innenelemente sind in diesem Fall entlang der ersten Richtung zwischen den Außenelementen angeordnet. Dabei ist es auch möglich dass auf wenigstens einer Seite eine Mehrzahl von Außenelementen angeordnet ist, die z.B. entlang der zweiten Richtung zueinander versetzt oder beabstandet sein können. Es sind auch Ausführungsformen möglich, bei denen ein Abschnitt eines Innenelements bezüglich der ersten Richtung außenseitig eines Außenelements angeordnet ist. Das wenigstens eine Außenelement ist mit den Innenelementen verbunden, so dass diese auch zumindest über das wenigstens eine Außenelement indirekt miteinander verbunden sind. Jedes Außenelement erstreckt sich des Weiteren entlang wenigstens eines Teils des Längsträgers in dessen Verlaufsrichtung, ggf. sogar entlang der gesamten Länge des Längsträgers. Es ist möglich, dass sich dabei der Querschnitt des Außenelements entlang der Verlaufsrichtung ändert. Dabei kann sich u.a. auch die o.g. Dicke entlang der Verlaufsrichtung ändern.

Erfindungsgemäß ist wenigstens ein Innenelement als Blechteil ausgebildet, mit einem sich entlang der ersten Richtung erstreckenden Steg, von dem an wenigstens einem Ende zwei durch umformendes Aufspalten von Blech erzeugte Flansche ausgehen, von denen wenigstens einer mit einem Außenelement verbunden ist. Das Innenelement ist ein Blechteil und besteht somit aus Metall, typischerweise aus Stahl, wenngleich auch andere Metalle, insbesondere Aluminium bzw. Aluminiumlegierungen, infrage kommen. Der Steg erstreckt sich entlang der ersten Richtung und kann ggf. auch wenigstens abschnittsweise parallel zu dieser verlaufen. Wenigstens abschnittsweise kann der Steg allerdings auch schräg zur ersten Richtung verlaufen. Entsprechend dem oben beschriebenen Verlauf der Innenelemente erstreckt sich jeder Steg entlang wenigstens eines Teils des Längsträgers in dessen Verlaufsrichtung, ggf. sogar entlang der gesamten Länge des Längsträgers. Von dem Steg gehen an wenigstens einem Ende zwei Flansche aus. Diese sind einstückig mit dem Steg ausgebildet, und zwar dadurch, dass ein Blech mittels Umformung aufgespalten wurde. D.h. zum Aufspalten des Blechs wird ein Umformen durchgeführt, kein Trennen. Das entsprechende Blech bildet nach der Umformung sowohl den Steg als auch die Flansche.

Das umformende Aufspalten kann im Wesentlichen durch zwei unterschiedliche Verfahren erfolgen, nämlich entweder durch ein Spaltprofilieren oder durch ein Spaltbiegen. Beiden Verfahren ist gemeinsam, dass ein Blechteil in mehreren Bearbeitungsstufen zur jeweiligen Endgeometrie umgeformt wird. Es wird dabei normalerweise entlang einer Bearbeitungsstraße gefördert, entlang der die den Bearbeitungsstufen entsprechenden Bearbeitungsstationen angeordnet sind. In jeder der Bearbeitungsstufen wird das Blech, das bevorzugt als endloses Blechband vorliegt, jeweils mit einer Umformwalze, die auch als Spaltwalze bezeichnet werden kann, und zwei einander gegenüberliegend angeordneten Hilfswalzen bearbeitet. Dabei findet eine Kaltumformung statt, bei der lokal eine Plastifizierung des Metalls erfolgt. Die Walzen der jeweiligen Bearbeitungsstufe bilden dabei normalerweise Teile eines Walzengerüsts, in welchem sie stationär gelagert sind. Die Hilfswalzen sind in aller Regel vertikal übereinander, und zwar oberhalb und unterhalb des Blechs, angeordnet, während die Spaltwalze auf Höhe der Blechmittenebene angeordnet ist. Es können auch zwei einander (horizontal) gegenüberliegende Spaltwalzen eingesetzt werden. Sofern wie beschrieben ein endloses Blechband umgeformt wird, erfolgt normalerweise nach der letzen umformenden Bearbeitungsstufe ein Abtrennen eines Abschnitts des Blechbandes, welcher dann das Blechteil bildet.

Im Falle des Spaltprofilierens, das bspw. in der DE 100 39 768 A1 beschrieben ist, wirkt die Spaltwalze auf eine endseitige Kante des - normalerweise ebenen - Blechs ein, wodurch dort eine Verzweigung ausgebildet wird und in mehreren Bearbeitungsstufen die vom Steg ausgehenden Flansche entstehen. Die Ausrichtung der Flansche relativ zum Steg kann dabei unmittelbar beim Spaltprofilieren und/oder in einem oder mehreren nachgeschalteten Umformschritten, z.B. durch Walzprofilieren, eingestellt werden. Beim Spaltbiegen, das bspw. in der DE 103 22 752 A1 beschrieben ist, wird in jedem Fall ein zuvor gebogenes Blech verwendet, das bspw. als U-Profil oder L-Profil ausgebildet sein kann. Die jeweilige Spaltwalze greift dabei in den Biegeradius ein, in dessen Bereich sich nachfolgend die Verzweigung ausbildet In mehreren Umformschritten lässt sich so ein Flansch formen. Wenn die Abspaltung des Flansches relativ nah am Rand des Blechs durchgeführt wird, kann der randseitig des Flansches angeordnete Teil des Blechs ebenfalls als ein Flansch angesehen werden, der allerdings im Allgemeinen eine größere Dicke aufweist, nämlich diejenige des Blechteils, das als Ausgangsmaterial dient. Durch die Umformung kommt es allerdings auch in diesem Teil zu einer Ausdünnung des Blechs, und zwar insbesondere in einem Bereich, in welchem die Spaltwalzen eingewirkt haben. Der Begriff "Flansch" ist im Zusammenhang mit der vorliegenden Erfindung nicht einschränkend dahingehend auszulegen, dass jeder Flansch gegenüber dem Steg abgewinkelt sein muss. Vielmehr handelt es sich bei den Flanschen allgemein um die Teile bzw. Abschnitte des Blechteils, die wie beschrieben durch umformendes Aufspalten erzeugt wurden und an wenigstens einem Ende von dem Steg ausgehen.

Mit jedem der genannten Verfahren lassen sich somit zwei von einem Steg ausgehende Flansche erzeugen, von denen erfindungsgemäß wenigstens einer mit einem Außenelement verbunden ist. Anders ausgedrückt, das als Blechteil ausgebildete Innenelement ist durch wenigstens einen der Flansche mit dem Außenelement verbunden. Bevorzugt sind dabei beide Flansche mit einem Außenelement verbunden, insbesondere mit dem gleichen Außenelement. Hierdurch kann eine effektive, stabile Anbindung des Innenelements erreicht werden. Außerdem kann sich hierdurch eine wenigstens annähernd symmetrische Belastung des Stegs sowie der Flansche ergeben, die ebenfalls der Stabilität zugutekommen kann. Darüber hinaus kommt den Flanschen auch für sich eine stabilisierende Funktion zu, da wenigstens ein Flansch im Winkel zum Steg verläuft, wodurch die Biegesteifigkeit quer zur Ebene des Stegs verbessert wird. Für diese Funktion muss der jeweilige Flansch nicht notwendigerweise mit einem Außenelement verbunden sein, sondern kann gewissermaßen frei bleiben. Gleichzeitig lassen sich derartige Blechteile mit Flanschen, die von einem Steg ausgehen, kostengünstig und ohne einen Fügeprozess fertigen. Dabei lassen sich je nach Bedarf auch vergleichsweise geringe Blechdicken von nur wenigen Millimetern einsetzen, welche mit integral gefertigten Flanschen versehen werden können. Die Dicke des eingesetzten Blechs bzw. die Dicke des Stegs kann typischerweise im Bereich zwischen 1,5 mm und 6 mm liegen, wobei Erfindung ausdrücklich nicht auf diesen Bereich beschränkt ist. Die Dicke kann im Einzelfall in Abhängigkeit von der Gesamtstruktur des Längsträgers, der vorgesehenen Belastung desselben sowie dem Fahrzeugtyp gewählt werden. Bei einem Längsträger für PKW werden üblicherweise Bleche mit einer Dicke zwischen 2 mm und 3 mm verwe4ndet. Die beschriebenen Innenelemente eignen sich in Kombination mit dem wenigstens einen Außenelement hervorragend zur Herstellung von leichten aber dennoch stabilen Strukturen. Von besonderer Bedeutung ist hierbei, dass zwischen den Innenelementen (und ggf. dem wenigstens einen Außenelement) wenigstens eine Kammer ausgebildet ist, also ein Zwischenraum, der zur Gewichtsersparnis beiträgt. Darüber hinaus lassen sich vielfältige, auch mehrkammerige sowie verzweigte Strukturen erzeugen, durch welche der Längsträger im Verhältnis zu seinem Gewicht ein hohes Energieabsorptionsvermögen bei einem Crash aufweist.

Ein weiterer entscheidender Vorteil ist, dass sich die Länge des Längsträgers ohne Weiteres variieren lässt, bspw. für verschiedene Varianten eines Fahrzeugmodells. Dies ist deshalb möglich, weil sich die als Blechteile ausgebildeten Innenelemente problemlos in verschiedenen Längen fertigen lassen. Sowohl beim Spaltprofilieren als auch beim Spaltbiegen wird im Allgemeinen ein endloses Blechband verwendet, von welchem nach erfolgter Umformung Stücke in jeweils gewünschter Länge abgetrennt werden können. Gleichermaßen lässt sich die Länge der Außenelemente im Allgemeinen problemlos an die Länge des Längsträgers anpassen. Ein weiterer Vorteil ist, dass die einzelnen Bestandteile des Längsträgers, d.h. die Innen- sowie Außenelemente, soweit erforderlich, einzeln umgeformt werden können, wodurch im Allgemeinen geringere Umformkräfte notwendig sind. Die Verbindung der einzelnen Elemente zum Längsträger kann nach der Umformung erfolgen. Ein weiterer Vorteil liegt auch darin, dass jedes Innenelement, das wie beschrieben als Blechteil mit einem Steg sowie Flanschen ausgebildet ist, durch eine Kaltumformung hergestellt wurde, mit der sich besonders geringe Toleranzen realisieren lassen. Dies ist wiederum für das Zusammenfügen der Innenelemente mit dem wenigstens einem Außenelement vorteilhaft. Durch die differenzielle Bauweise des Längsträgers aus Innenelementen und Außenelement(en) lassen sich die mechanischen Eigenschaften sehr gut in gewünschter Weise anpassen, d.h. es kann gewissermaßen ein maßgeschneiderter Längsträger gefertigt werden. Dies betrifft insbesondere auch die Einstellung eines erwünschten Verformungsverhaltens bei einem Crash, z.B. einem Seitenaufprall.

Hinsichtlich der Ausrichtung der Flansche bezüglich des Stegs sind unterschiedliche Möglichkeiten gegeben. Gemäß einer Ausgestaltung gehen die Flansche T-förmig vom Steg ab, d.h. beide Flansche verlaufen in einem Winkel von 90° zum Steg und der Winkel zwischen den Flanschen beträgt 180°. Gemäß einer anderen Ausgestaltung gehen die Flansche Y-förmig vom Steg ab, d.h. jeder der Flansche verläuft in einem Winkel von über 90° zum Steg und der Winkel zwischen n den Flanschen ist kleiner als 180°. Daneben sind selbstverständlich auch andere Möglichkeiten gegeben, wobei die Flansche bspw. nicht symmetrisch bezüglich des Stegs ausgerichtet sein müssen. Wie bereits oben erwähnt, ist es im Rahmen der Erfindung auch möglich, dass ein Flansch im Winkel von 180° zum Steg verläuft, also gewisser maßen dessen Verlängerung bildet. Diese Ausgestaltung ist allerdings im Allgemeinen weniger gut für eine Verbindung des Innenelements mit einem Außenelement geeignet.

Bevorzugt sind bei wenigstens einem Innenelement die Flansche durch Spaltprofilieren erzeugt. Dieses Verfahren hat gegenüber dem Spaltbiegen den Vorteil, dass sich damit leichter zwei randseitige Flansche vergleichbarer Dicke erzeugen lassen. Dies wiederum kann vorteilhaft sein, wenn eine Verbindung beider Flansche mit dem Außenelement vorgesehen ist. Alternativ hierzu können die Flansche allerdings auch, wie bereits erwähnt, durch Spaltbiegen erzeugt sein.

Um die beiderseits endseitige Verbindung der Innenelemente durch wenigstens ein Außenelement zu realisieren, muss das jeweilige Innenelement selbstverständlich an beiden Enden mit einem Außenelement verbunden sein. Dies ist vorteilhaft dadurch möglich, dass wenigstens ein Innenelement an beiden Enden jeweils zwei durch umformendes Aufspalten von Blech erzeugte Flansche aufweist, von denen jeweils wenigstens einer mit einem Außenelement verbunden ist. Selbstverständlich ist auch hierbei bevorzugt, dass jeder der insgesamt vier Flansche mit einem Außenelement verbunden ist, wodurch sich im Allgemeinen eine optimale Verbindungsfestigkeit und somit eine Verbesserung der mechanischen Eigenschaften des Längsträgers erreichen lässt.

Hinsichtlich der Verbindung des Flansches mit dem Außenelement bestehen im Rahmen der Erfindung unterschiedlichste Möglichkeiten. Diese hängen zum einen von dem Material des Außenelements ab sowie zum anderen auch von der Form bzw. Ausdehnung des Anlagebereichs zwischen dem Flansch und dem Außenelement, wie nachfolgend noch diskutiert wird. Allgemein kann wenigstens ein Flansch stoffschlüssig, formschlüssig und/oder kraftschlüssig mit dem Außenelement verbunden sein. Beispiele für eine stoffschlüssige Verbindungsmethode sind unterschiedliche Schweißverfahren, wie bspw. Laserschweißen, oder auch Verkleben. Ein Formschluss und/oder einen Kraftschluss zwischen dem Flansch und dem Außenelement ist normalerweise über ein zwischengeordnetes Verbindungsteil gegeben, bspw. eine Schraube, ein Niet oder dergleichen.

Gemäß einer Ausgestaltung liegt wenigstens ein Flansch mit einer Kante an einem Außenelement an. Dies kann bspw. dann der Fall sein, wenn die zwei Flansche Y-förmig vom Steg abgehen, während der Steg bspw. im rechten Winkel zum Außenelement verläuft. Bei dieser Ausführungsform ergibt sich ein linienartiger Anlagebereich zwischen dem jeweiligen Flansch und dem Außenelement. In diesem Fall ist allgemein eine stoffschlüssige Verbindung durch Kleben oder Verschweißen bevorzugt. Vorteilhaft kann sich bei der oben beschriebenen Y-förmigen Anordnung der Flansche auswirken, dass bei Anbindung der Kanten beider Flansche zwischen den Flanschen und dem Außenelement eine (weitere) Kammer ausgebildet ist. Diese zusätzliche Kammer kann beispielsweise die Energieaufnahme bei einem Crash positiv beeinflussen.

Erfindungsgemäß liegt wenigstens ein Flansch mit einer Seitenfläche an einem Außenelement an. In diesem Fall ist also ein flächiger Anlagebereich gegeben, für den andere Verbindungsmethoden genutzt werden können. Selbstverständlich ist auch hier eine stoffschlüssige Verbindung durch Verschweißen oder Verkleben möglich, wobei insbesondere der flächige Anlagebereich für eine stabile Verklebung genutzt werden kann. Ergänzend oder alternativ zu einer stoffschlüssigen Verbindung eignen sich aber hier insbesondere auch form- und/oder kraftschlüssige Verbindungsmittel, die sowohl den Flansch als auch das Außenelement durchgreifen. Ein Beispiel für eine Ausgestaltung, bei der zwei Flansche jeweils mit einer Seitenfläche an einem Außenelement anliegen, ist, dass die Flansche T-förmig vom Steg ausgehen, wobei der Steg rechtwinklig zum Außenelement verläuft.

Für das wenigstens eine Außenelement kommen unterschiedliche Materialien infrage, wobei bestimmte mechanische Eigenschaften in Verbindung mit einem geringen Gewicht als vorteilhaft angesehen werden. Gemäß einer Ausführungsform ist wenigstens ein Außenelement aus Metallblech oder Faserverbundstoff gefertigt. Das Metallblech kann bspw. aus Stahl oder einem Leichtmetall wie Aluminium bzw. einer Aluminiumlegierung bestehen. Im Fall von Faserverbundstoff können unterschiedliche Fasern (z.B. Glasfasern, Carbonfasern oder Aramidfasern) in Verbindung mit unterschiedlichen Kunststoffen bzw. Harzen verwendet werden. Es wäre auch denkbar, dass ein Außenelement eine mehrschichtige Struktur aufweist, in der bspw. Schichten mit unterschiedlichen faserverstärkten Kunststoffen kombiniert werden.

Bevorzugt sind eine Mehrzahl von Innenelementen wie beschrieben als Blechteil mit einem Steg und endseitigen Flanschen ausgebildet. Durch die Anzahl der auf diese Weise versetzt zueinander angeordneten Blechteile kann die Anzahl der Kammern variiert werden, was sich wiederum auf die mechanischen Eigenschaften des Längsträgers auswirkt.

Alternativ oder ergänzend kann wenigstens ein Innenelement aus Leichtmetall, insbesondere Aluminium, oder Faserverbundstoff gefertigt sein. Sofern das Innenelement aus Leichtmetall gefertigt ist, kann es insbesondere als Aluminium-Strangpressprofil, U-Profil oder dergleichen ausgebildet sein. Durch die Kombination derartiger Leichtmetall-Bauteile mit den oben beschriebenen Blechteilen, welche endseitige Flansche aufweisen, lassen sich sowohl die mechanischen Eigenschaften als auch die Masse des Längsträgers in unterschiedlichster Weise je nach Bedarf einstellen. Gleiches gilt für ein Innenelement aus Faserverbundstoff. Bspw. wäre es denkbar, dass durch die Kombination wenigstens eines Innenelements aus Faserverbundstoff mit einem wie oben beschrieben als Blechteil ausgebildeten Innenelement das geringe Gewicht des Faserverbundstoffs mit vorteilhaften mechanischen Eigenschaften des Blechteils kombiniert werden können. Es ist somit alles in allem möglich, ein maßgeschneidertes Produkt aus einzelnen Komponenten - Innenelementen und Außenelement(en) -je nach Bedarf zu fertigen.

Die Form bzw. der Verlauf des Längsträgers ist im Rahmen der Erfindung in keiner Weise eingeschränkt. Im einfachsten Fall kann dieser gerade ausgebildet sein, er kann aber auch abgewinkelte oder gebogene Bereiche aufweisen. Gemäß einer bevorzugten Ausführungsform weist der Längslenker wenigstens einen um die Hochachse gebogenen Abschnitt auf. Diese Aussage bezieht sich selbstverständlich auf die Orientierung zur Hochachse im bestimmungsgemäß eingebauten Zustand des Längsträgers im Straßenfahrzeug. Dabei kann im Rahmen der Herstellung für den Biegeprozess der einzelnen Innenelemente die oben beschriebene Plastifizierung beim Spaltprofilierprozess vorteilhaft ausgenutzt werden, indem das Biegen zusammen mit der letzten Bearbeitungsstufe des Spaltens erfolgt. Dabei kann das Biegen gewissermaßen gegen die Walzen dieser Bearbeitungsstufe erfolgen. Dies ist insbesondere dann möglich, wenn die erste Richtung der Y-Richtung entspricht und sich der Steg somit innerhalb der X-Y-Ebene erstreckt. Im Rahmen der Herstellung können zunächst die einzelnen Innenelemente entsprechend der vorgesehenen Form des Längsträgers - insbesondere wie beschrieben (zeitlich parallel zum letzten Teil des Spaltprozesses) - gebogen werden und in einem nachfolgenden Fügeprozess mit dem wenigstens einen Außenelement verbunden werden.

Der Querschnitt des Längsträgers kann entlang seiner gesamten Länge konstant sein. Es sind allerdings auch Abweichungen hiervon möglich. Gemäß einer bevorzugten Ausführungsform weist der Längsträger einen entlang der Längsrichtung variierenden Querschnitt auf. Hierdurch können insbesondere das Flächenträgheitsmoment um die Y-Achse oder das Flächenträgheitsmoment um die Z-Achse abschnittsweise angepasst werden. Dies kann damit einhergehen, dass der Querschnitt in der Höhe und/oder in der Breite variiert. Es bestehen dabei verschiedene Möglichkeiten. Zum einen kann wenigstens ein Innenelement und/oder einen Außenelement einen in Längsrichtung veränderlichen Querschnitt aufweisen. Es wäre auch denkbar, dass statt eines einzelnen, in Längsrichtung durchgehenden Innen- bzw. Außenelements eine Mehrzahl von Elementen mit unterschiedlichem Querschnitt eingesetzt werden, die in Längsrichtung aufeinanderfolgen. Weiterhin wäre es möglich, dass abschnittsweise ein Teil eines Innenelements und/oder Außenelements abgetrennt wird. Außerdem kann der Längsträger einen in Längsrichtung abschnittsweise durch wenigstens ein Verstärkungselement verstärkten Querschnitt aufweisen. Das jeweilige Verstärkungselement kann gewissermaßen innen, im Bereich der Innenelemente angeordnet sein, also zwischen zwei Außenelementen bzw. zwischen zwei Abschnitten eines Außenelements. Es kann sich sogar um ein Innenelement handeln, das sich nur entlang eines Teilabschnitts des Längsträgers erstreckt. Es kann allerdings auch außen angefügt sein, bspw. an wenigstens ein Außenelement oder an ein von außen zugängliches Innenelement. Als Materialien für an solches Verstärkungselement kommen bspw. Stahl, Leichtmetall oder Faserverbundstoff infrage.

Durch die Erfindung wird auch ein Verfahren zur Herstellung eines Längsträgers für ein Straßenfahrzeug zur Verfügung gestellt. Dabei werden zunächst eine Mehrzahl von Innenelementen sowie wenigstens ein flächiges Außenelement bereitgestellt. Des Weiteren erfolgt ein Verbinden der Innenelemente mit dem wenigstens einen Außenelement, so dass die Innenelemente sich im Querschnitt des Längsträgers entlang einer ersten Richtung erstrecken und entlang einer zweiten Richtung zueinander versetzt angeordnet sind und das wenigstens eine Außenelement sich entlang der zweiten Richtung erstreckt, wobei wenigstens zwei Innenelemente bezüglich der ersten Richtung beiderseits endseitig durch wenigstens ein Außenelement miteinander verbunden werden, so dass zwischen ihnen wenigstens eine Kammer ausgebildet wird. Dabei ist wenigstens ein Innenelement als Blechteil ausgebildet, mit einem Steg, von dem an wenigstens einem Ende zwei durch umformendes Aufspalten von Blech erzeugte Flansche ausgehen, wobei der Steg so angeordnet wird, dass er sich entlang der ersten Richtung erstreckt, und wobei wenigstens ein Flansch mit einem Außenelement verbunden wird.

Diese Begriffe wurden oben im Zusammenhang mit dem erfindungsgemäßen Längsträger erläutert und werden insofern nicht nochmals erklärt. Bevorzugte Ausführungsformen des erfindungsgemäßen Verfahrens entsprechen denen des erfindungsgemäßen Längsträgers.

Bevorzugt wird im Zuge des Bereitstellens der Innenelemente das wenigstens eine Innenelement hergestellt, indem durch umformendes Aufspalten von Blech die zwei von dem Steg ausgehenden Flansche erzeugt werden. Dies kann wie bereits oben dargestellt entweder durch Spaltprofilieren oder durch Spaltbiegen geschehen. Wie bereits oben beschrieben, erfolgt die Umformung in mehreren Bearbeitungsstufen, wobei das Blech jeweils mittels wenigstens einer Spaltwalze sowie zweier Hilfswalzen umgeformt wird.

Bevorzugt wird ein endloses Blechband entlang einer Bearbeitungsstraße gefördert, entlang der Bearbeitungsstationen angeordnet sind, die den Bearbeitungsstufen entsprechen.

Entsprechend einer vorteilhaften Ausgestaltung des Verfahrens wird ein Längsträger hergestellt, der wenigstens einen um die Hochachse gebogenen Abschnitt aufweist. Dabei wird bei dem wenigstens einen Innenelement wenigstens ein um die Hochachse gebogener Abschnitt hergestellt, indem das Biegen in einem Bereich des Innenelements durchgeführt wird, während in diesem Bereich das Aufspalten erfolgt. In aller Regel wird dies während der letzten Bearbeitungsstufe des Aufspaltens durchgeführt. Dabei kann das Blechband mittels einer Biegestation umgeformt werden, die im Zusammenspiel mit den Spaltwalzen der letzten Bearbeitungsstufe ein Biegemoment ausgibt. Eine derartige Biegestation kann bspw. Ein Paar von Führungswalzen aufweisen, zwischen denen das Blechband in durchgeführt wird und die quer zur Förderrichtung verstellbar sind. Dabei resultiert aus dem seitlichen Versatz der Führungswalzen gegenüber den Spaltwalzen das Biegemoment. Optional können die Führungswalzen auch noch eine geringfügige Umformung des Profils vornehmen, bspw. um die Ausrichtung der Flansche zu korrigieren.

Details der Erfindung werden nachfolgend anhand von Ausführungsbeispielen mit Bezug auf die Figuren erläutert. Hierbei zeigt
- Fig. 1: eine Draufsicht einer ersten Ausführungsform eines erfindungsgemäßen Längsträgers;
- Fig. 2: eine perspektivische Schnittdarstellung des Längsträgers aus Fig. 1 entsprechend der Linie II-II;
- Fig. 3: eine perspektivische Schnittdarstellung des Längsträgers aus Fig. 1 entsprechend der Linie III-III;
- Fig. 4: eine Schnittdarstellung des Längsträgers aus Fig. 1 entsprechend der Linie IV-IV;
- Fig. 5: eine Fig. 4 entsprechende Schnittdarstellung einer zweiten Ausführungsform eines erfindungsgemäßen Längsträgers;
- Fig. 6: eine Fig. 4 entsprechende Schnittdarstellung einer dritten Ausführungsform eines erfindungsgemäßen Längsträgers;
- Fig. 7: eine schematische Seitenansicht einer Bearbeitungsstraße zur Herstellung eines Innenelements für den Längsträger aus Fig. 1;
- Fig. 8A: eine schematische Darstellung einer ersten Bearbeitungsstation der Bearbeitungsstraße aus Fig. 7;
- Fig. 8B: eine schematische Darstellung einer zweiten Bearbeitungsstation der Bearbeitungsstraße aus Fig. 7;
- Fig. 8C: eine schematische Darstellung einer dritten Bearbeitungsstation der Bearbeitungsstraße aus Fig. 7;
- Fig. 9: eine perspektivische Darstellung der dritten Bearbeitungsstation aus Fig. 8C; sowie
- Fig. 10: eine schematische Draufsicht eines Teils der Bearbeitungsstraße aus Fig. 7.

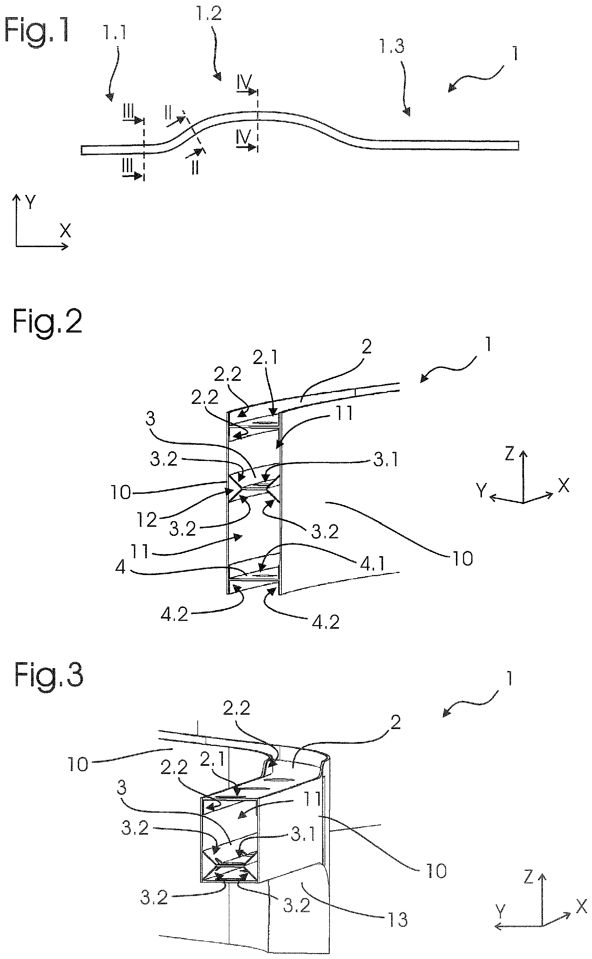

Fig. 1 zeigt eine Draufsicht auf einen erfindungsgemäßen Längsträger 1 für ein Kraftfahrzeug gemäß einer ersten Ausführungsform. In diesem Fall weist der Längsträger 1 einen Vorderabschnitt 1.1 sowie einen Hinterabschnitt 1.3 auf, die parallel zur X-Achse verlaufen, sowie einen gekrümmten Mittelabschnitt 1.2. In dem Mittelabschnitt 1.2 ist der Längsträger um die Z-Achse gebogen. Insgesamt liegt die Verlaufsrichtung des Längsträgers 1 in diesem Beispiel innerhalb der X-Y-Ebene.

Die innere Struktur des Längsträgers 1 ist in den Figuren 2 bis 4 dargestellt, die jeweils Schnittdarstellungen repräsentieren. Wie in Fig. 1 erkennbar ist, verläuft die Schnittebene in Fig. 2 durch den Mittelabschnitt 1.2, während sie in Fig. 3 durch den Vorderabschnitt 1.1 verläuft. Der Längsträger 1 weist im Profil drei Innenelemente 2, 3, 4 auf, die als Blechteile aus Stahl ausgebildet sind. Jedes der Innenelemente 2 - 4 verläuft einerseits entlang der Verlaufsrichtung des Längsträgers 1, andererseits erstreckt sich jedes Innenelement 2 - 4 entlang einer ersten Richtung, die senkrecht zur Verlaufsrichtung des Längsträgers 1 verläuft und insoweit im Vorderabschnitt 1.1 sowie im Hinterabschnitt 1.3 mit der Y-Richtung übereinstimmt. Des Weiteren sind die Innenelemente 2 - 4 entlang einer zweiten Richtung, nämlich der Z-Richtung, zueinander versetzt, genauer gesagt voneinander beabstandet. Entlang der ersten Richtung beiderseits der Innenelemente 2 - 4 ist jeweils ein flächiges Außenelement 10 angeordnet, durch welches die Innenelemente 2 - 4 endseitig miteinander verbunden sind. Jedes der Außenelemente 10 erstreckt sich dabei zum einen entlang der Verlaufsrichtung des Längsträgers 1 sowie zum anderen entlang der Z-Richtung.

Die jeweiligen Innenelemente 2 - 4 weisen jeweils einen parallel zur ersten Richtung verlaufenden Steg 2.1, 3.1, 4.1 auf, von dem an jedem Ende jeweils zwei Flansche 2.2, 3.2, 4.2 ausgehen. Letztere sind jeweils mit dem einem Außenelement 10 verbunden. Hinsichtlich der Verbindung bestehen unterschiedliche Möglichkeiten. Sofern das Außenelement 10 bspw. als Stahlblech ausgebildet ist, können die Flansche 2.2, 3.2, 4.2 insbesondere mit dem Außenelement 10 verschweißt sein. Alternativ käme auch bspw. ein Vernieten infrage. Das Außenelement könnte allerdings bspw. auch aus einem Leichtmetall bestehen, welches sich mit Stahl nicht verschweißen lässt, oder aus Faserverbundstoff. In diesem Fall könnten die Flansche 2.2, 3.2, 4.2 mit dem jeweiligen Außenelement 10 bspw. verklebt oder vernietet sein.

Zwischen jeweils zwei Innenelementen 2 - 4 und den beiden Außenelementen 10 ist jeweils eine Kammer 11 ausgebildet. Der Längsträger 1 weist somit ein Mehrkammerprofil auf, wodurch er vor dem Hintergrund eines zu erwartenden Lastkollektivs optimiert ist. Dies betrifft zum einen die statischen und dynamischen Belastungen während des normalen Betriebs des Fahrzeugs, zum anderen auch das Verformungs- und Energieabsorptionsverhalten bei einem Unfall.

Die drei Innenelemente 2 - 4 sind unterschiedlich ausgestaltet. Bei einem bezüglich der Z-Achse zuoberst angeordneten ersten Innenelement 2 sowie bei einem zuunterst angeordneten dritten Innenelement 4 gehen die Flansche 2.2, 4.2 in einem 90°-Winkel, also T-förmig, vom Steg 2.1, 4.1 ab. Sie liegen somit mit einer Seitenfläche 2.3, 4.3 am Außenelement 10 an. Es ist daher eine relativ große Anlagefläche geben, was bspw. für ein Verkleben vorteilhaft ist. Bei einem bezüglich der Z-Achse in der Mitte angeordneten zweiten Innenelement 3 gehen die Flansche 3.2 Y-förmig vom Steg 3.1 ab, d.h. sie verlaufen in einem Winkel von weniger als 90° zum Steg 3.1. Sie liegen insofern mit einer Kante 3.3 am jeweiligen Außenelement 10 an. Einerseits ist hierdurch zwar eine kleinere Anlagefläche gegeben, andererseits sind im Bereich der Flansche 3.2 zwischen dem zweiten Innenelement 3 und dem jeweiligen Außenelement 10 zwei weitere Kammern 12 ausgebildet.

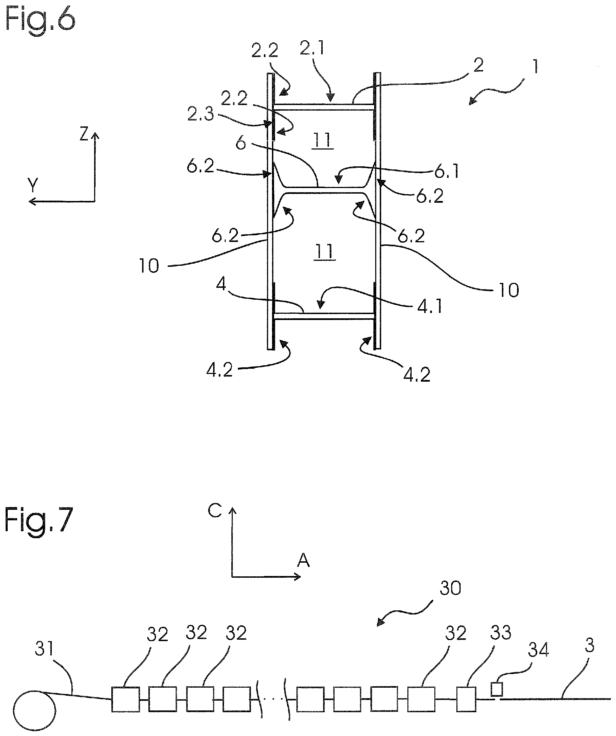

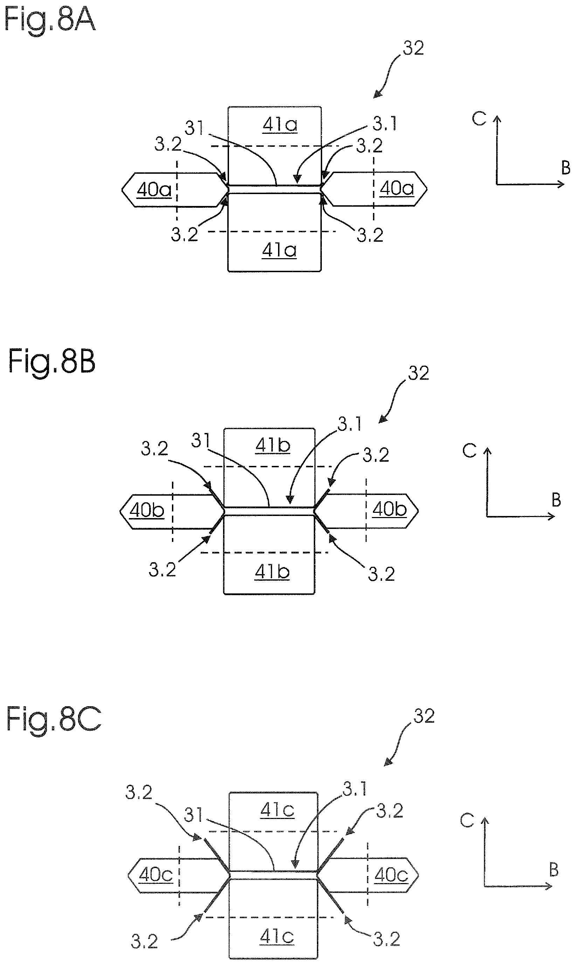

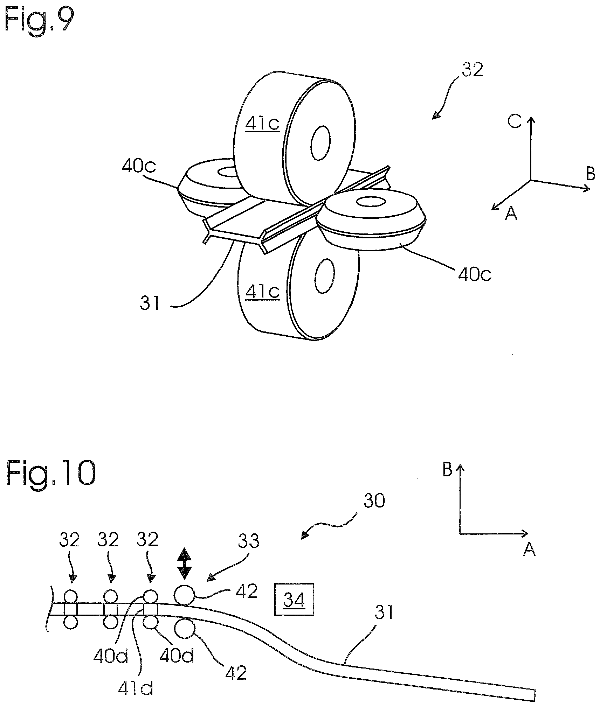

Beim Herstellungsprozess des Längsträgers 1 werden zunächst die einzelnen Innenelemente 2 - 4 aus streifenförmigen Blechen hergestellt, indem durch Spaltprofilieren die von dem jeweiligen Steg 2.1, 3.1, 4.1 ausgehenden Flansche 2.2, 3.2, 4.2 erzeugt werden. Optional kann die Ausrichtung der Flansche 2.2, 3.2, 4.2 durch ein nachfolgendes Walzprofilieren eingestellt bzw. korrigiert werden. Der Herstellungsprozess des zweiten Innenelements 3 ist beispielhaft anhand der Figuren 7 - 10 dargestellt. Den Ausgangspunkt des Herstellungsprozesses bildet einen endloses Blechband 31, das kontinuierlich entlang einer Bearbeitungsstraße 30 gefördert wird. Die Bearbeitungsstraße 30 lässt sich durch eine Längsachse A, eine Querachse B sowie eine Hochachse C charakterisieren, wobei die Längsachse der Förderrichtung entspricht. Die Bearbeitungsstraße 30 weist dabei eine Mehrzahl von hintereinander angeordneten Bearbeitungsstationen 32 auf, die nacheinander die einzelnen Bearbeitungsstufen durchführen. Fig. 8A - 8C zeigen dabei beispielhaft drei - nicht unmittelbar aufeinanderfolgende - Bearbeitungsstationen 32. Fig. 8A zeigt eine frühe Bearbeitungsstufe, bei der zwei Spaltwalzen 40a beiderseits auf die Kanten des Blechbands 31 einwirken, während zwei Hilfswalzen 41a oberhalb und unterhalb des Stegs 3.1 einen Gegendruck zu den Hilfswalzen 41a erzeugen. Durch die Einwirkung der Spaltwalzen 40a im Zusammenspiel mit den Hilfswalzen 41a wird der Steg 3.1 umformend aufgespalten und es beginnen sich die Flansche 3.2 auszubilden. Dieser umformende, also nicht-trennende Prozess wird sukzessive fortgeführt. Fig. 8b zeigt eine mittlere Bearbeitungsstufe, bei der das Blechband 31 wiederum durch zwei einander gegenüberliegende Spaltwalzen 40b im Zusammenspiel mit zwei Hilfswalzen 41b umgeformt wird. In diesem Zustand befindet sich bereits mehr Material in den Flanschen 3.2 und diese sind länger ausgebildet. Fig. 8C und Fig. 9 zeigen eine späte Bearbeitungsstufe, bei welcher die Stege 3.2 bereits etwa ihre vorgesehene Länge erhalten haben. Auch in dieser Bearbeitungsstufe wirken zwei Spaltwalzen 40c mit zwei Hilfswalzen 41c zusammen.

Im Zusammenhang mit der letzten Stufe des Spaltprofilierens wird das Blechband 31 um die Z-Achse bzw. die Hochachse C der Bearbeitungsstraße 30 gebogen, entsprechend dem in Fig. 1 erkennbaren Verlauf des Längsträgers 1. Dies ist schematisch in der Draufsicht in Fig. 10 dargestellt. Eine Biegevorrichtung 33 weist zwei Führungswalzen 42 auf, zwischen denen das Blechband 31 hindurch geführt wird, nachdem es eine letzte Bearbeitungsstufe 32 durchlaufen hat. Diese Bearbeitungsstufe 32 weist zwei Spaltwalzen 40d sowie zwei Hilfswalzen 41d auf, und führt eine letzte Stufe des Spaltprozesses durch. Zeitlich parallel zu dieser letzten Stufe erfolgt das Biegen um die Hochachse C, in dem die Führungswalzen 42 wie durch den Doppelpfeil angedeutet, parallel zur Querachse B so eingestellt werden, dass sich ein Versatz gegenüber den Spaltwalzen 40d ergibt, aus dem wiederum ein Biegemoment resultiert. Das Biegen erfolgt gegen die letzte Bearbeitungsstufe 32 bzw. um die Spaltwalzen 40d derselben. Optional können die Führungswalzen 42 auch noch eine geringfügige Einstellung des Querschnitts des Blechbands 31 vornehmen. Schließlich wird, wie in Fig. 7 stark schematisiert dargestellt, das zweite Innenelement 3 mittels einer Trennvorrichtung 34 vom Blechband 31 abgetrennt. Dies geschieht, sobald ein dem Längsträger 1 entsprechendes Teilstück des Blechbandes 31 vollständig gebogen ist und die letzte Bearbeitungsstufe 32 durchlaufen hat. Je nach Material der Außenelemente 10 werden diese entweder entsprechend dem vorgesehenen Verlauf gebogen oder sie können aus Faserverbundstoff direkt entsprechend der vorgesehenen Form urgeformt werden. Schließlich erfolgt das Verbinden der Außenelemente 10 mit den Innenelementen, wobei je nach Material wie oben beschrieben unterschiedliche Verbindungsmethoden verwendet werden können. Aufgrund der kontinuierlichen Bearbeitung der Innenelemente 2, 3, 4 auf Basis eines endlosen Blechbands 31 können die Länge derselben ebenso wie ihr Verlauf, also ihre Biegung um die Z-Achse, ohne größeren Aufwand angepasst werden, bspw. wenn für unterschiedliche Varianten eines Fahrzeugmodells unterschiedlich lange oder unterschiedlich gebogene Längsträger 1 zu fertigen sind.

Wie insbesondere aus der Zusammenschau von Fig. 2 und Fig. 3 erkennbar ist, ist das Profil des Längsträgers 1 nicht entlang seiner gesamten Länge konstant, sondern es ist im Mittelabschnitt 1.2 gegenüber dem Vorderabschnitt 1.1 sowie dem Hinterabschnitt 1.3 verstärkt. Dabei erstreckt sich das dritte Innenelement 4 nur entlang des Mittelabschnitts 1.2, während sich das erste und zweite Innenelement 2, 3 entlang der gesamten Länge des Längsträgers 1 erstrecken. Entsprechend weist das jeweilige Außenelement 10 im Vorderabschnitt 1.1 sowie im Hinterabschnitt 1.3 eine im Vergleich zum Mittelabschnitt 1.2 reduzierte Höhe auf. Zudem sind die nach oben weisenden Flansche 2.2 des ersten Innenelements 2 bereichsweise entfernt. Um den Längsträger 1 im Vorderabschnitt 1.1 sowie im Hinterabschnitt 1.3 nach unten hin abzuschließen, ist einen flächiges Deckelement 13 vorgesehen, dass mit den Außenelementen 10 verbunden ist. Dieses Deckelement 13 kann aus dem gleichen Material bestehen wie die Außenelemente 10 und kann je nach Material bspw. mit diesen verklebt oder verschweißt sein.

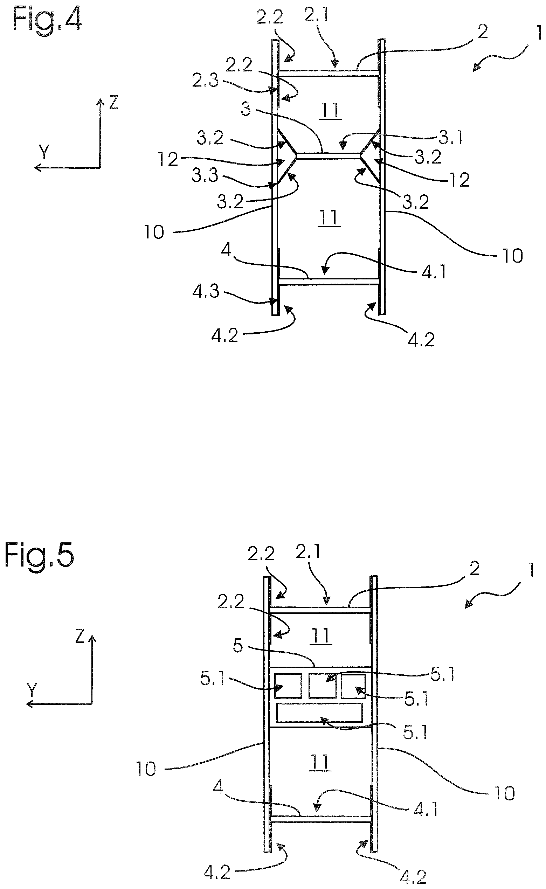

Fig. 5 zeigt eine Schnittdarstellung einer zweiten Ausführungsform eines Längsträgers 1, die weitgehend mit der ersten Ausführungsform übereinstimmt und insoweit nicht nochmals erläutert wird. Allerdings ist in diesem Fall statt des zweiten Innenelements 3 ein viertes Innenelement 5 vorgesehen, welches als Aluminium-Strangpressprofil ausgebildet ist. Dieses weist eine Mehrzahl von Kammern 5.1 auf, die ebenfalls zur Gewichtsersparnis beitragen. Zu beachten ist allerdings, dass die aus Stahlblech gebildeten Innenelemente 2, 4 im Vergleich zu einer ausschließlich auf Aluminium-Strangpressprofilen aufbauenden Struktur einerseits zur Kostenreduzierung beitragen, andererseits lässt sich aufgrund der an ihnen durchgeführten Kaltumformung eine hohe Maßhaltigkeit leicht realisieren, da Ausdehnungs- und Schrumpfungsprozesse aufgrund von Temperaturveränderungen zu vernachlässigen sind. Das vierte Innenelement 5 kann mit den Außenelementen 10 bspw. verklebt werden.

Fig. 6 zeigt eine Schnittdarstellung einer dritten Ausführungsform eines Längsträgers 1, die ebenfalls weitgehend mit der ersten Ausführungsform übereinstimmt und insoweit nicht nochmals erläutert wird. Statt des zweiten Innenelements 3 ist hier ein fünftes Innenelement 6 vorgesehen, das aus Faserverbundstoff gefertigt ist. Es weist einen in Y-Richtung verlaufenden Steg 6.1 auf, von dem endseitig jeweils zwei an geformte Flansche 6.2 ausgehen. Das fünfte Innenelement 6 kann ebenfalls bspw. mit den Außenelementen 10 verklebt werden.

### Bezugszeichenliste

- 1: Längsträger
- 1.1: Vorderabschnitt
- 1.2: Mittelabschnitt
- 1.3: Hinterabschnitt
- 2 - 6: Innenelement
- 2.1, 3.1, 4.1, 6.1: Steg
- 2.2, 3.2, 4.2, 6.2: Flansch
- 2.3, 4.3: Seitenfläche
- 3.3: Kante
- 5.1, 11, 12: Kammer
- 13: Deckelement
- 10: Außenelement
- 30: Bearbeitungsstraße
- 31: Blechband
- 32: Bearbeitungsstation
- 33: Biegevorrichtung
- 34: Trennvorrichtung
- 40a, 40b, 40c, 40d: Spaltwalze
- 41a, 41b, 41c, 41d: Hilfswalze
- 42: Führungswalze
- A: Hochachse
- B: Querachse
- C: Längsachse
- X: X-Achse
- Y: Y-Achse
- Z: Z-Achse

## Patentansprüche

1. Längsträger (1) für ein Straßenfahrzeug, mit
- einer Mehrzahl von Innenelementen (2 - 6), die sich im Querschnitt des Längsträgers (1) entlang einer ersten Richtung (Y) erstrecken und entlang einer zweiten Richtung (Z) zueinander versetzt angeordnet sind, sowie
- wenigstens einem flächigen Außenelement (10), das sich entlang der zweiten Richtung (Z) erstreckt, wobei wenigstens zwei Innenelemente (2 - 6) bezüglich der ersten Richtung (Y) beiderseits endseitig durch wenigstens ein Außenelement (10) miteinander verbunden sind, so dass zwischen ihnen wenigstens eine Kammer (11) ausgebildet ist,
wobei
wenigstens ein Innenelement (2 - 6) als Blechteil ausgebildet ist, mit einem sich entlang der ersten Richtung erstreckenden Steg (2.1, 3.1, 4.1), von dem an wenigstens einem Ende zwei durch umformendes Aufspalten von Blech erzeugte Flansche (2.2, 3.2, 4.2) ausgehen, von denen wenigstens einer mit einer Seitenfläche (2.3, 4.3) an dem wenigstens einen Außenelement (10) anliegt und mit diesem verbunden ist.

2. Längsträger nach Anspruch 1,
**dadurch gekennzeichnet, dass** bei wenigstens einem Innenelement (2 - 6) die Flansche (2.2, 3.2, 4.2) durch Spaltprofilieren erzeugt sind.

3. Längsträger nach einem der vorherigen Ansprüche, **dadurch gekennzeichnet, dass** wenigstens ein Flansch (2.2, 3.2, 4.2) stoffschlüssig, formschlüssig und/oder kraftschlüssig mit dem Außenelement (10) verbunden ist.

4. Längsträger nach einem der vorherigen Ansprüche, **dadurch gekennzeichnet, dass** wenigstens ein Flansch (2.2, 3.2, 4.2) mit einer Kante (3.3) an einem Außenelement (10) anliegt.

5. Längsträger nach einem der vorherigen Ansprüche, **dadurch gekennzeichnet, dass** wenigstens ein Außenelement (10) aus Metallblech oder Faserverbundstoff gefertigt ist.

6. Längsträger nach einem der vorherigen Ansprüche, **dadurch gekennzeichnet, dass** wenigstens ein Innenelement (2 - 6) aus Leichtmetall oder Faserverbundstoff gefertigt ist.

7. Längsträger nach einem der vorherigen Ansprüche, **dadurch gekennzeichnet, dass** dieser wenigstens einen um die Hochachse (Z) gebogenen Abschnitt (1.2) aufweist.

8. Längsträger nach einem der vorherigen Ansprüche, **dadurch gekennzeichnet, dass** dieser einen entlang der Längsrichtung (X) variierenden Querschnitt aufweist.

9. Verfahren zur Herstellung eines Längsträgers (1) für ein Straßenfahrzeug, mit den Schritten:
- Bereitstellen einer Mehrzahl von Innenelementen (2 - 6),
- Bereitstellen wenigstens eines flächigen Außenelements (10), sowie
- Verbinden der Innenelemente (2 - 6) mit dem wenigstens einen Außenelement (10), so dass die Innenelemente (2 - 6) sich im Querschnitt des Längsträgers (1) entlang einer ersten Richtung (Y) erstrecken und entlang einer zweiten Richtung (Z) zueinander versetzt angeordnet sind und das wenigstens eine Außenelement (10) sich entlang der zweiten Richtung erstreckt (Z), wobei wenigstens zwei Innenelemente (2 - 6) bezüglich der ersten Richtung (Y) beiderseits endseitig durch wenigstens ein Außenelement (10) miteinander verbunden werden, so dass zwischen ihnen wenigstens eine Kammer (11) ausgebildet wird,
wobei
wenigstens ein Innenelement (2 - 6) als Blechteil ausgebildet ist, mit einem Steg (2.1, 3.1, 4.1), von dem an wenigstens einem Ende zwei durch Aufspalten von Blech erzeugte Flansche (2.2, 3.2, 4.2) ausgehen, wobei der Steg (2.1, 3.1, 4.1) so angeordnet wird, dass er sich entlang der ersten Richtung (Y) erstreckt und wobei wenigstens ein Flansch (2.2, 3.2, 4.2) mit einer Seitenfläche (2.3, 4.3) an dem wenigstens einen Außenelement (10) angelegt und mit diesem verbunden wird.

## Claims

1. Longitudinal beam (1) for a road vehicle, comprising:
- a plurality of inner elements (2-6) which extend in the cross section of the longitudinal beam (1) in a first direction (Y) and are arranged so as to be offset with respect to one another in a second direction (Z); and
- at least one flat outer element (10) which extends in the second direction (Z), wherein at least two inner elements (2-6) are connected to one another at both ends with respect to the first direction (Y) by at least one outer element (10), such that at least one chamber (11) is formed between them,
wherein at least one inner element (2-6) is designed as a sheet metal part, comprising a web (2.1, 3.1, 4.1) extending in the first direction, from which web two flanges (2.2, 3.2, 4.2) which are formed by splitting sheet metal in a reshaping manner project at at least one end, a lateral surface (2.3, 4.3) of at least one of said flanges abutting the at least one outer element (10) and being connected thereto.

2. Longitudinal beam according to claim 1, **characterized in that**, in the case of at least one inner element (2-6), the flanges (2.2, 3.2, 4.2) are produced by gap profiling.

3. Longitudinal beam according to either of the preceding claims, **characterized in that** at least one flange (2.2, 3.2, 4.2) is integrally, interlockingly and/or frictionally connected to the outer element (10).

4. Longitudinal beam according to any of the preceding claims, **characterized in that** an edge (3.3) of at least one flange (2.2, 3.2, 4.2) abuts an outer element (10).

5. Longitudinal beam according to any of the preceding claims, **characterized in that** at least one outer element (10) is made of sheet metal or fiber composite.

6. Longitudinal beam according to any of the preceding claims, **characterized in that** at least one inner element (2-6) is made of light metal or fiber composite.

7. Longitudinal beam according to any of the preceding claims, **characterized in that** said longitudinal beam has at least one portion (1.2) which is bent about the vertical axis (Z).

8. Longitudinal beam according to any of the preceding claims, **characterized in that** said longitudinal beam has a cross section which varies in the longitudinal direction (X).

9. Method for producing a longitudinal beam (1) for a road vehicle, comprising the following steps:
- providing a plurality of inner elements (2-6);
- providing at least one flat outer element (10); and
- connecting the inner elements (2-6) to the at least one outer element (10), such that the inner elements (2-6) extend in the cross section of the longitudinal beam (1) in a first direction (Y) and are arranged so as to be offset with respect to one another in a second direction (Z) and the at least one outer element (10) extends in the second direction (Z), wherein at least two inner elements (2-6) are connected to one another at both ends with respect to the first direction (Y) by at least one outer element (10), such that at least one chamber (11) is formed between them,
wherein at least one inner element (2-6) is designed as a sheet metal part, comprising a web (2.1, 3.1, 4.1) from which two flanges (2.2, 3.2, 4.2) which are formed by splitting sheet metal project at at least one end, wherein the web (2.1, 3.1, 4.1) is arranged so as to extend in the first direction (Y) and wherein a lateral surface (2.3, 4.3) of at least one flange (2.2, 3.2, 4.2) abuts the at least one outer element (10) and is connected thereto.

## Revendications

1. Support longitudinal (1) pour véhicule routier, comprenant :
- une multitude d'éléments intérieurs (2 - 6), qui s'étendent en coupe transversale du support longitudinal (1) le long d'une première direction (Y) et sont disposés décalés l'un par rapport à l'autre le long d'une deuxième direction (Z), ainsi que
- au moins un élément extérieur plan (10), qui s'étend le long de la deuxième direction (Z), où au moins deux éléments intérieurs (2 - 6) sont reliés l'un à l'autre par rapport à la première direction (Y), sur les deux extrémités par au moins un élément extérieur (10), de sorte qu'au moins une chambre (11) est formée entre eux,
où au moins un élément intérieur (2 - 6) est formé d'une pièce de tôle, avec une tige (2.1, 3.1, 4.1) s'étendant le long d'une première direction, de laquelle partent sur au moins une extrémité, deux brides (2.2, 3.2, 4.2) produites par déformation de la tôle, dont au moins une repose avec une surface latérale (2.3, 4.3) sur l'au moins un élément extérieur (10) et est reliée à celui-ci.

2. Support longitudinal selon la revendication 1, **caractérisé en ce que** pour au moins un élément intérieur (2 - 6), la bride (2.2, 3.2, 4.2) est produite par profilage par division.

3. Support longitudinal selon l'une des revendications précédentes, **caractérisé en ce qu'**au moins une bride (2.2, 3.2, 4.2) est reliée à l'élément extérieur (10) par assemblage de matières, compatibilité de forme et/ou à force.

4. Support longitudinal selon l'une des revendications précédentes, **caractérisé en ce qu'**au moins une bride (2.2, 3.2, 4.2) repose avec un bord (3.3) sur un élément extérieur (10).

5. Support longitudinal selon l'une des revendications précédentes, **caractérisé en ce qu'**au moins un élément extérieur (10) est usiné à partir d'une tôle métallique ou d'un composite de fibres.

6. Support longitudinal selon l'une des revendications précédentes, **caractérisé en ce qu'**au moins un élément intérieur (2 - 6) est usiné à partir d'un métal léger ou d'un composite de fibres.

7. Support longitudinal selon l'une des revendications précédentes, **caractérisé en ce que** celui-ci présente au moins une section (1.2) courbée autour de l'axe vertical (Z).

8. Support longitudinal selon l'une des revendications précédentes, **caractérisé en ce que** celui-ci présente une coupe transversale variable le long de la direction longitudinale (X).

9. Procédé de production d'un support longitudinal pour véhicule routier, comprenant les étapes de :
- préparation d'une série d'éléments intérieurs (2 - 6),
- préparation d'au moins un élément extérieur plan (10), ainsi que
- connexion des éléments intérieurs (2 - 6) avec au moins un élément extérieur (10), de sorte que les éléments intérieurs (2 - 6) s'étendent en coupe transversale du support longitudinal (1) le long d'une première direction (Y) et sont disposés décalés l'un par rapport à l'autre le long d'une deuxième direction (Z), et que l'au moins un élément extérieur plan (10) s'étend le long de la deuxième direction (Z), où au moins deux éléments intérieurs (2 - 6) sont reliés l'un à l'autre par rapport à la première direction (Y), sur les deux extrémités par au moins un élément extérieur (10), de sorte qu'au moins une chambre (11) est formée entre eux,
où au moins un élément intérieur (2 - 6) est formé d'une pièce de tôle, avec une tige (2.1, 3.1, 4.1), de laquelle partent sur au moins une extrémité, deux brides (2.2, 3.2, 4.2) produites par déformation de la tôle, où la tige (2.1, 3.1, 4.1) est agencée de sorte qu'elle s'étend le long de la première direction (Y) et où au moins une bride (2.2, 3.2, 4.2) repose par une surface latérale (2.3, 4.3) sur au moins un élément extérieur (10) et est relié à celui-ci.
